(19) **Europäisches Patentamt / European Patent Office / Office européen des brevets**

(11) **EP 3 525 108 A1**

(12) # EUROPEAN PATENT APPLICATION

(43) Date of publication:
**14.08.2019 Bulletin 2019/33**

(51) Int Cl.:
***G06F 17/27*** *(2006.01)*

(21) Application number: **18211564.2**

(22) Date of filing: **11.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.02.2018 US 201862628177 P
26.11.2018 US 201816200548**

(71) Applicant: **NTT DOCOMO, INC.
Tokyo 100-6150 (JP)**

(72) Inventors:
- **Subasic, Pero
Palo Alto, CA 94304-1201 (US)**
- **Lin, Xiao
Palo Alto, CA 94304-1201 (US)**

(74) Representative: **Hoffmann Eitle
Patent- und Rechtsanwälte PartmbB
Arabellastraße 30
81925 München (DE)**

(54) **INCREMENTAL GENERATION OF WORD EMBEDDING MODEL**

(57)    A system and method are provided to transform vectors from a first vector model resulting from a first text corpus and also to transform vectors from a second vector model resulting from a second text corpus into a combined vector model. Advantageously, no access or retraining on the first text corpus is required.

FIG. 2

**Description**

**CROSS-REFERENCE TO RELATED APPLICATION(S)**

This application claims priority to and the benefit of U.S. Provisional Application No. 62/628,177 filed February 8, 2018, the content of which is hereby incorporated in its entirety.

**TECHNICAL FIELD**

This application relates to natural language processing, and more particularly to the assembly of a new vector model from a first vector model resulting from a first text corpus and a second vector model resulting from a second text corpus.

**BACKGROUND**

Programming languages such as C++ are rigorously unambiguous and precise. But natural language is neither unambiguous nor precise. For example, the word "get" may mean to obtain in one context but in another context, it means to understand. To enable a machine to process natural language, early approaches tried a semantic approach in which the machine tried to apply grammatical rules. But such approaches were largely unworkable. For example, machine translation using grammatical rules resulted in virtually comical errors in the translated text. But modern natural language processing is much more powerful and results in translations that may be rather accurate and require little or no human editing.

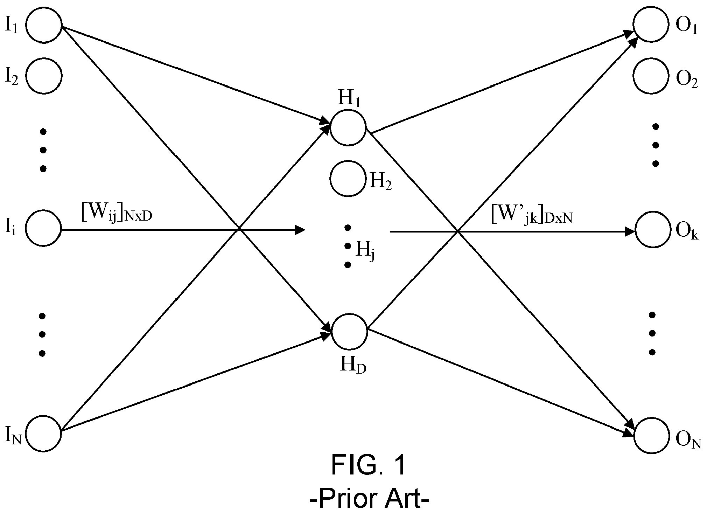

To obtain such results, modem natural language processing represents (embeds) words or phrases as vectors. Since what is being embedded may be a single word or a plurality of words, the symbols being embedded may be denoted as tokens, where each token represents at least one word. For example, suppose there are N tokens being embedded from the text corpus, N being a plural positive integer. Each token may then be assigned to a dimension in an N-dimensional vector (one-hot encoding). The resulting input vectors from the various tokens are used to train a neural network. An example is the Word2Vec neural network 100 shown in Figure 1 that was developed by Google using a single hidden layer having a plurality of D nodes (D being approximately 300 for the Word2Vec model). The N input nodes range from a first input node $I_1$ to an Nth input node $I_N$. The D hidden nodes range from a first hidden node $H_1$ to a Dth hidden node $H_D$. The N output nodes are analogous to the N input nodes and thus range from a first output node $O_1$ to an Nth output node $O_N$. After training on the corpus, the resulting Word2Vec neural network coefficients form an [N X D] matrix (N rows and D columns) that is denoted as the vector model for the corresponding corpus. Each of the N one-hot input vectors maps to a vector of D dimensions in the [N X D] matrix forming the vector model. Curiously, it is not the neural network per se that is of interest but instead it is the vectors in the vector model. In particular, words having similar context and meaning will tend to cluster in the D-dimensional space formed by the N vectors of D dimension. Using this spatial similarity, a processor can analyze a document and "understand" in human-like ways. For example, a processor can parse context from a document and suggest similar documents to a user, translate documents, understand user queries, and so on.

Although natural language programming (NLP) with word embedding is thus very powerful, it requires a rather large corpus to achieve accurate results. For example, the Word2Vec model was trained on a corpus of over 100 billion words. Such a relatively huge third-party corpus is not available to NLP researchers. Moreover, even if the corpus were made public, the training of a neural network on such a huge corpus is time consuming and expensive. Moreover, language is ever changing. For example, consider the recent development of terms such a "fake news" or "Zika virus." Enhancing the original corpus with the never-ending stream of new language becomes unworkable due to the huge size of the resulting corpus.

Accordingly, there is a need in the art for an ability to quickly update or enhance a vector model for word embedding.

**SUMMARY**

A method and system are disclosed in which a pre-existing vector model resulting from an original corpus may be combined with vectors from another vector model to form a combined vector model without requiring any access or use of the original corpus. In particular, a transformation is provided so that the vectors from the pre-existing model and then vectors from the additional vector model may be transformed into vectors forming the combined vector model. The result is quite advantageous because the new corpus may be relatively small whereas the original corpus is significantly larger. It would be very cumbersome to instead combine the original corpus with the new corpus to form a combined corpus and train a neural network on the combined corpus to produce the combined vector model. But the transformation disclosed herein obviates such cumbersome training and enables the enhancement of a pre-existing vector model through a new corpus corresponding to a new vector model by merely transforming the vectors from the pre-existing vector model and from the new vector model into the vectors for the combined vector model.

These advantageous features may be better appreciated through a consideration of the detailed description below.

## BRIEF DESCRIPTION OF THE DRAWINGS

Figure 1 is an illustration of the Word2Vec neural network.
Figure 2 is a block diagram for a computerized vector transformation and assembling system in accordance with an aspect of the disclosure.
Figure 3 illustrates an example computer system for implementing the modules shown in Figure 2.

## DETAILED DESCRIPTION

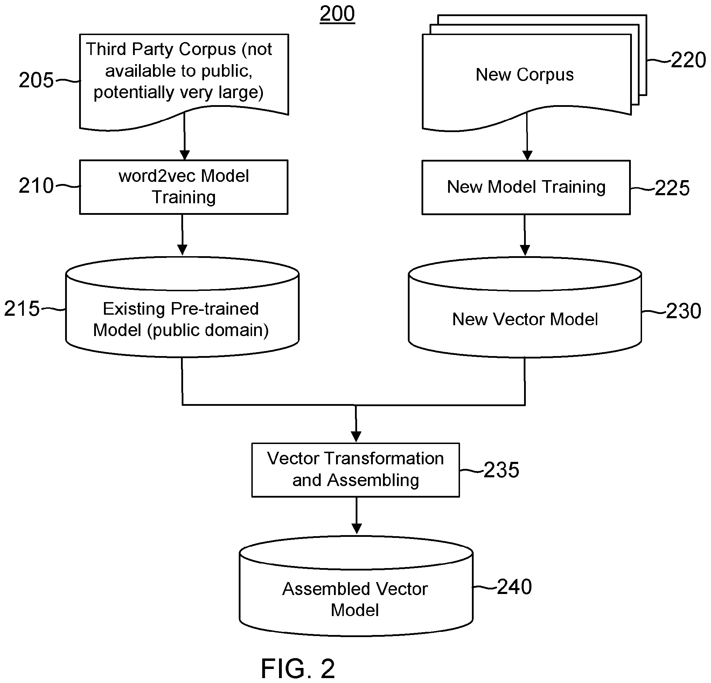

A computerized vector model transformation and assembly system 200 is shown in **Figure 2.** System 200 involves the use of a single-hidden-layer neural network such as practiced by the Word2Vec model. But it will be appreciated that the vector transformation techniques disclosed herein are readily applicable to deep neural networks that have more than one hidden layer. The following discussion involving the use of the Word2Vec model is thus merely exemplary such that it will be appreciated that other word embedding generation models may be utilized. As discussed previously, the Word2Vec model is trained on a relatively large third-party corpus 205. Such a third-party corpus 205 is pre-existing and potentially very large. Training a neural network on such a large corpus is advantageous but involves a considerable amount of time and computing resources. Moreover, NLP researchers may not have access to such a third-party corpus. Even if access is granted, it would be prohibitive in terms of time and computing cost to update such a third-party corpus with additional corpora and then train a corresponding neural network on the resulting improved corpus. But vector transformation system 200 requires no training on such a massive improved corpus yet the benefits from the relatively large third-party corpus 205 are retained.

The pre-existing third-party corpus 205 trains the Word2Vec neural network in a Word2Vec vector training module 210 to produce the pre-existing pre-trained vector model 215. There is a plurality of N vectors in vector model 215, N being a plural positive integer. These N vectors correspond to the N tokens selected from pre-existing corpus 205. Each vector has a dimensionality of D, which is the number of hidden nodes in the Word2Vec model. The resulting vector model 215 is ideally public-domain. If not, access would need to be obtained to practice the vector transformation disclosed herein. Although pre-existing vector model 215 benefits from the vast size of corpus 205, language is ever changing as discussed previously. Moreover, no corpus can contain all the text available even if the time frame is fixed. Vector model 215 may thus be improved by using a new corpus (or new corpora) 220 and training a new neural network training module 225 on the new corpus 220 to produce a new vector model 230. The number of input nodes for the new neural network depends upon the number of words (tokens) being embedded from corpus 220. In the following discussion, this plurality of input nodes is represented by the plural positive integer M. In general, M will not equal N, the number of input nodes for the Word2Vec model. But the new neural network will have the same number D of hidden nodes. Thus, the M vectors that form new vector model 230 will have a dimensionality of D such that new vector model 230 forms an M by D matrix.

As discussed previously, pre-trained vector model 215 includes a vector for each word or phrase in corpus 205 that is represented in pre-trained vector model 215. For example, a word A maps to a vector A in model 215, a word B maps to a vector B, and so on. If there are 10,000 words to be embedded, vector model 215 thus includes 10,000 corresponding vectors. The dimensionality D of each vector in vector model 215 depends upon the number of hidden nodes in the corresponding neural network. In an embodiment using the Word2Vec model, each vector in vector model 215 has a dimensionality of approximately three hundred. Each dimension of such a vector space may be represented by a unit basis vector. There would thus be three-hundred-unit basis vectors spanning the vector space for vector model 215 for a Word2Vec embodiment.

The dimensionality for new vector model 230 matches the dimensionality for existing pre-trained vector model 115. The vector space for new vector model 230 will thus also be represented by three-hundred-unit basis vectors in a Word2Vec embodiment. But Applicant has discovered the following curious feature regarding the unit basis vectors defining new vector model 230 as opposed to those for pre-trained (and pre-existing) vector model 215. Specifically, Applicant has discovered that the unit basis vectors for new vector model 230 will virtually always be orthogonal to those for pre-existing vector model 215. Although Applicant does not include a mathematical proof for such orthogonality it has been observed in repeated tests and has thus been shown heuristically to be true. This remarkable result is believed to result from the symmetric neural network architecture of word2vec and its stochastic gradient descend (SGD) training procedure which usually terminates at local minimal points depending on the pseudorandom seeding. Regardless of what causes it, the resulting orthogonality is exploited herein in a vector transformation and assembling module 235 to create an assembled vector model 240 (which may also be denoted as a combined vector model since it results from the effective combination of new corpus 220 and third-party corpus 205). In other words, assembled vector model 240 is equivalent to the result of training of a corresponding neural network on a combined corpus that results from the combination of third-party corpus 205 and new corpus 220. But such a training is problematic in terms of time and computing power given the relative size of such a combined corpus. Moreover, even given the time and computing resources, it may be an impossible task for a given NLP researcher since third-party corpus 205 would typically be unavailable for public access. Vector transformation and assembly module 235 solves these problems by transforming the vectors from vector models 215 and 230 so that they may be combined to form assembled vector model 240.

This advantageous vector transformation and assembly will now be discussed in more detail. As discussed earlier, there are N vectors in pre-existing vector model 215 because N corresponding tokens were selected from corpus 205 for the neural network training 210. The neural network for the Word2Vec model would thus have N input nodes. In addition, this neural network has a plurality of D hidden nodes so each vector in vector model 215 has D dimensions. The vector space for vector model 215 may thus be represented by a plurality of D unit basis vectors ranging from a first unit basis vector to a Dth unit basis vector.

New corpus 220 has M vectors. In general, M will be less than N due to the larger size of corpus 205 as compared to new corpus 220. With regard to the M vectors, P of them are directed to the same words as embedded from corpus 205 into pre-existing model 215. The vectors in pre-existing model 215 may thus be sub-divided into the P vectors concerning words shared with new model 230 and (N - P) vectors for words that are not shared with new model 230. Similarly, the vectors in new model 230 may be divided into P vectors for words shared with pre-existing model 215 and (M - P) vectors for words that are not shared with pre-existing model 215. The vectors in pre-existing vector model 215 may thus be represented as:

$$\vec{V}_o = \left\{ \vec{v}_{o1}, \vec{v}_{o2}, \dots, \vec{v}_{oP}, \vec{v}_{o(P+1)}, \dots, \vec{v}_{oN} \right\}$$

Similarly, the vectors in new vector model 230 may be represented as:

$$\vec{V}_n = \left\{ \vec{v}_{n1}, \vec{v}_{n2}, \dots, \vec{v}_{nP}, \vec{v}_{n(P+1)}, \dots, \vec{v}_{nM} \right\}$$

The vector space for both models is defined by a plurality of D unit basis vectors. In particular, the vector space for pre-existing model 215 may be represented as:

$$\left\{ \vec{b}_{o1}, \vec{b}_{o2}, \dots, \vec{b}_{oD} \right\}$$

whereas the vector space for new model 230 may be represented as:

$$\left\{ \vec{b}_{n1}, \vec{b}_{n2}, \dots, \vec{b}_{nD} \right\}$$

Given the orthogonality of the basis vectors from one vector model to the next, the P vectors in models 215 and 230 for the same words are orthogonal to each other, which may be represented through the dot product:

$$\langle \vec{v}_{oi}, \vec{v}_{ni} \rangle = 0 \ \ for \ i \ \in [1, P]$$

The transformation applied in vector transformation and assembling module 235 will now be described. With regard to this transformation, there is a matrix T that rotates the unit basis vectors for new vector model 230 into the unit basis vectors for pre-existing model 215 such that:

$$\vec{b}_{oi} = [T] \cdot \vec{b}_{ni}$$

Given the orthogonality of the basis vectors between the two models, the matrix [T] has the property that:

$$\sum_{k=1}^{D} t_{ik}\, t_{kj} = \begin{cases} 1 & for\ i = j \\ 0 & for\ i \neq j \end{cases} \quad \text{Eq (1)}$$

This property combined with the constraint that:

$$\vec{v}_{oi} = [\mathbf{T}] \cdot \vec{v}_{ni} \ for\ i \in [1, P] \quad \text{Eq. (2)}$$

results in a set of equations that are readily solved through a least square method to determine the matrix elements of [T]. Alternatively, one can pick D words from the P common word set for both models and use equation (2) to form a linear system of dimension $D^2$ that is solved to get a matrix whose columns are orthogonalized by equation (1) to obtain the coefficients for matrix [T].

Regardless of how the matrix [**T**] is derived, this transformation matrix may then be used to assemble the two models into a combined or assembled model 240, which may be represented as:

$$\vec{V}_t = \left\{ \vec{v}_{t1}, \vec{v}_{t2}, \dots, \vec{v}_{tP}, \vec{v}_{t(P+1)}, \dots, \vec{v}_{tN}, \vec{v}_{t(N+1)}, \vec{v}_{t(N+2)}, \dots, \vec{v}_{t(N+M-P)} \right\} \quad Eq.\ (3)$$

where

$$\vec{v}_{ti} = \left( \frac{r}{r+1} \vec{v}_{oi} + \frac{1}{r+1} [\mathbf{T}] \cdot \vec{v}_{ni} \right) \ for\ i \in [1, P] \quad \text{Eq. (4)}$$

$$\vec{v}_{ti} = \vec{v}_{oi} \ for\ i \in [P+1, N] \quad \text{Eq. (5)}$$

$$\vec{v}_{ti} = [\mathbf{T}] \cdot \vec{v}_{n(i-N+P)} \ for\ i \in [N+1, N+M-P] \quad Eq.\ (6)$$

The factor r is defined by the ratio of the corpus size (number of tokens) for pre-existing corpus 205 as compared to the token number for new corpus 220. Note that if the token size is unknown for corpus 205 to generate pre-existing model 215, the factor *r* could be selected as a large number (e.g., 500) in the case that common words (the P shared words) in pre-existing model 215 are considered to have better accuracy. Alternatively, the estimate of r may be reduced if the corpus sizes are comparable.

Equation (4) makes intuitive sense in that the P shared words should each map to a vector that has a contribution from pre-existing model 215 and also from new model 230. Equation (5) is also intuitive in that words embedded by pre-existing model 215 that are not shared by new model 230 should have no contribution from new model 230. Finally, equation (6) is also intuitive in that it addresses the words embedded by new model 230 that are not shared by pre-existing model 215 such that there is no vector contribution from pre-existing model 215.

As an example, system 200 was tested using a new corpus selected from health news with the factor r equaling 500. One would expect that common words between the pre-trained vector model and the combined model should map to similar vectors. Thus, one way to test the accuracy of the new model is to determine the cosine similarity of the pre-existing vector and the combined vector for various shared words. For completeness, the cosine similarity between vectors for words only in the pre-existing model are also compared to the corresponding vectors in the combined model, although it is known from equation (5) that there should be no difference between such pre-existing and combined vectors. Finally, the cosine similarity is also tested between vectors in the new model and the corresponding vectors in the combined model for words that are not shared with the old model such as addressed through equation (6). The variance for the resulting cosine similarities is as follows:

|  | Cosine Similarity Variance (3-sigma) |
|---|---|
| Word Pairs only in Word2Vec Model | 0.00%±0.00% |
| Word Pairs in Both Models | 0.10%±1.77% |
| Word Pairs only in Health News Model | 2.67%±9.74% |

As expected, there is no differences for the word pairs that are found only in the Word2Vec model. Similarly, there is relative little difference for the shared word pairs as was also expected. For the word pairs that are only found in the new model (in this example, a health model), there is a larger cosine similarity variance, which is caused by the transformation matrix [T] not being strictly orthonormal.

To show the "health comprehension" improvement in the combined model that one would expect over the original Word2Vec model, an example would be the cosine similarity between "medical" and "health." In the original Word2Vec model, the cosine similarity for these words was 0.54. But this similarity is increased to 0.67 for the combined model. Finally, consider the similarity between "zika' and "blood." The corpus for the Word2Vec model did not include zika so there can be no cosine similarity between zika and blood in that case. For the combined model, this similarity becomes 0.74 as one would expect given the strong association between the words blood and the zika virus.

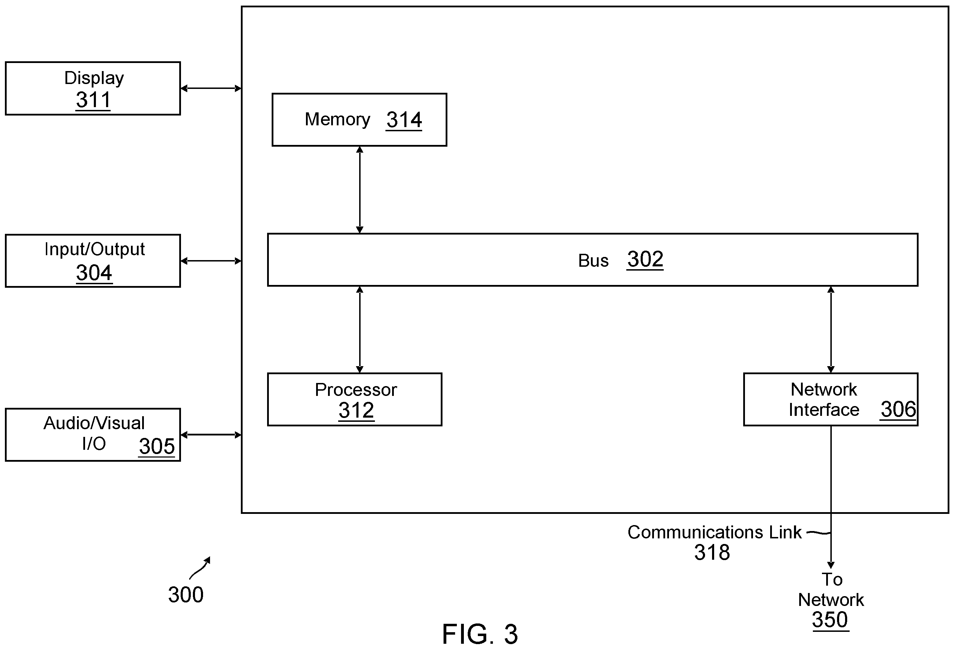

A computer system 300 shown in **Figure 3** for implementing modules 225 and 235 will now be discussed. It will be appreciated that these modules may be implemented using one or more computers or instead may be instantiated using a configured FPGA or ASIC(s). An administrator may configure system 300 using a display 311, a keyboard 304, and audio/visual I/O 305. System 300 includes at least one processor coupled to a memory 314 of instructions through a bus 302. Bus 302 also couples to a network 350 such as the internet through a network interface 306 and a communications link 318. In this fashion, corpus 120 may be readily received by system 300 from network 350. Instructions stored in memory 314 that are executed by processor 312 to implement the various modules discussed herein may be written in Java or other suitable programming languages.

The preceding description was exemplary such that those of ordinary skill in the art will appreciate that numerous modifications, substitutions and variations can be made in and to the materials, apparatus, configurations and methods of use of the devices of the present disclosure without departing from the scope thereof. In light of this, the scope of the present disclosure should not be limited to that of the particular embodiments illustrated and described herein, as they are merely by way of some examples thereof, but rather, should be fully commensurate with that of the claims appended hereafter and their functional equivalents.

**Claims**

1. A computerized method, comprising:

   receiving a first vector model, wherein the first vector model results from a first neural network trained on a first corpus, and wherein the first neural network includes a plurality of hidden nodes, and wherein the first vector model spans a vector space defined by a plurality of first basis vectors;
   training a second neural network on a second corpus to produce a second vector model, wherein the second neural network has the same plurality of hidden nodes as included in the first neural network, and wherein the second vector model spans a vector space defined by a plurality of second basis vectors;
   determining a transformation matrix that transforms the plurality of second basis vectors into the plurality of first basis vectors;
   transforming the first vector model and the second vector model into a combined vector model using the transformation matrix.

2. The computerized method of claim 1, wherein a first plurality of vectors in the first vector model result from an embedding of a plurality of words that are also embedded by the second vector model and wherein a second plurality of vectors in the second vector model correspond to the first plurality of vectors, and wherein transforming the first vector model and the second vector model comprises, for each vector in the first plurality of vectors:

   multiplying the vector by a coefficient to form a weighted vector;
   multiplying the corresponding vector in the second plurality of vectors by the transformation matrix to form a transformed vector; and
   summing the weighted vector and the transformed vector to form a first transformed vector.

3. The computerized method of claim 2, wherein the second vector model further includes a third plurality of vectors that result from words that are not embedded by the first vector model, and wherein transforming the first vector model and the second vector model further comprises:
   multiplying each vector in the third plurality of vectors by the transformation matrix to form a second transformed vector.

4. The computerized method of claim 1, wherein the first vector model is a Word2Vec vector model.

**5.** The computerized method of claim 1, wherein the first vector model is a public domain vector model.

**6.** The computerized method of claim 1, wherein each first basis vector in the plurality of first basis vectors is orthogonal to each second basis vector in the plurality of second basis vectors.

**7.** The computerized method of claim 1, wherein determining the transformation matrix comprises solving a set of equations using a least squares method.

**8.** The computerized method of claim 2, wherein for each vector in the first plurality of vectors: multiplying the vector by the coefficient to form the weighted vector comprises multiplying the vector by a factor $(r/r + 1)$, wherein r is ratio of a first corpus size for the first corpus to a second corpus size for the second corpus.

**9.** The computerized method of claim 8, wherein r equals 500.

**10.** The computerized method of claim 8, wherein for each vector in the first plurality of vectors: multiplying the corresponding vector in the second plurality of vectors by the transformation matrix to form the transformed vector comprises multiplying the corresponding vector in the second plurality of vectors by the transformation matrix and a factor $(1/(r + 1))$ to form the transformed vector.

**11.** A computerized system, comprising:

a memory configured to store a first vector model, wherein the first vector model results from a first neural network trained on a first corpus, and wherein the first neural network includes a plurality of hidden nodes, and wherein the first vector model spans a vector space defined by a plurality of first basis vectors;
a vector training module configured to train a second neural network on a second corpus to produce a new vector model, wherein the second neural network has the same plurality of hidden nodes as included in the first neural network, and wherein the second vector model spans a vector space defined by a plurality of second basis vectors; and
a transformation module configured to determine a transformation matrix for transforming the plurality of second basis vectors into the plurality of first basis vectors and configured to transform the first vector model and the second vector model into a combined vector model using the transformation matrix.

**12.** The computerized system of claim 11, wherein a first plurality of vectors in the first vector model results from an embedding of a plurality of words that are also embedded by the second vector model and wherein a second plurality of vectors in the second vector model correspond to the first plurality of vectors, and wherein the transformation module is configured to transform the first vector model and the second vector model by, for each vector in the first plurality of vectors:

a multiplication of the vector by a coefficient to form a weighted vector;
a multiplication of the corresponding vector in the second plurality of vectors by the transformation matrix to form a transformed vector; and
a summation of the weighted vector and the transformed vector to form a first transformed vector.

**13.** The computerized system of claim 12, wherein the second vector model further includes a third plurality of vectors that result from words that are not embedded by the first vector model, and wherein the transformation module is further configured to:
multiply each vector in the third plurality of vectors by the transformation matrix to form a second transformed vector.

**14.** The computerized system of claim 11, wherein the first vector model is a Word2Vec vector model.

**15.** The computerized system of claim 11, wherein the first vector model is a public domain vector model.

**16.** The computerized system of claim 11, wherein each first basis vector in the plurality of first basis vectors is orthogonal to each second basis vector in the plurality of second basis vectors.

**17.** The computerized system of claim 11, wherein the transformation module is configured to determine the transformation matrix by a solution of a set of equations according to a least squares method.

18. The computerized system of claim 12, wherein for each vector in the first plurality of vectors: the multiplication of the vector by the coefficient to form the weighted vector comprises a multiplication of the vector by a factor ($r/r + 1$), wherein r is ratio of a first corpus size for the first corpus to a second corpus size for the second corpus.

19. The computerized system of claim 18, wherein r equals 500.

20. The computerized system of claim 18, wherein for each vector in the first plurality of vectors: the multiplication of the corresponding vector in the second plurality of vectors by the transformation matrix to form the transformed vector comprises a multiplication of the corresponding vector in the second plurality of vectors by the transformation matrix and a factor ($1/(r + 1)$) to form the transformed vector.

FIG. 1
-Prior Art-

**200**

```
            ┌──────────────────────┐              ┌──────────────────────┐
            │  Third Party Corpus   │              │                      │
            │  (not available to    │              │     New Corpus       │──220
        205─│  public, potentially  │              │                      │
            │      very large)      │              └──────────────────────┘
            └──────────────────────┘                         │
                       │                                      ▼
                       ▼                          ┌──────────────────────┐
            ┌──────────────────────┐              │  New Model Training   │──225
        210─│  word2vec Model       │              └──────────────────────┘
            │     Training          │                         │
            └──────────────────────┘                         ▼
                       │                          ┌──────────────────────┐
                       ▼                          │                      │
            ┌──────────────────────┐              │  New Vector Model     │──230
        215─│  Existing Pre-trained │              │                      │
            │  Model (public domain)│              └──────────────────────┘
            └──────────────────────┘
```

Vector Transformation and Assembling ──235

Assembled Vector Model ──240

FIG. 2

EP 3 525 108 A1

| Display 311 |
| Input/Output 304 |
| Audio/Visual I/O 305 |

| Memory 314 |
| Bus 302 |
| Processor 312 |
| Network Interface 306 |

Communications Link 318

To Network 350

300

FIG. 3

Europäisches
Patentamt

European
Patent Office

Office européen
des brevets

# EUROPEAN SEARCH REPORT

Application Number

EP 18 21 1564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WENPENG YIN ET AL: "Learning Word Meta-Embeddings", PROCEEDINGS OF THE 54TH ANNUAL MEETING OF THE ASSOCIATION FOR COMPUTATIONAL LINGUISTICS (VOLUME 1: LONG PAPERS). BERLIN, GERMANY, 7 August 2016 (2016-08-07), pages 1351-1360, XP055590416, Stroudsburg, PA, USA DOI: 10.18653/v1/P16-1128 | 1-5, 7-15, 17-20 | INV. G06F17/27 |
| Y | * abstract * * Sections 1 & 4, particularly 4.3 * | 6,16 | |
| Y | AVO MUROM\"AGI ET AL: "Linear Ensembles of Word Embedding Models", ARXIV.ORG, CORNELL UNIVERSITY LIBRARY, 201 OLIN LIBRARY CORNELL UNIVERSITY ITHACA, NY 14853, 5 April 2017 (2017-04-05), XP080760930, | 6,16 | |
| A | * abstract * * Sections 1, 2, 2.1, 2.2 * | 1-5, 7-15, 17-20 | TECHNICAL FIELDS SEARCHED (IPC) |
| A | Jeffrey Pennington ET AL: "GloVe: Global Vectors for Word Representation", Web Archive copy of webpage, 25 September 2016 (2016-09-25), XP055444350, Retrieved from the Internet: URL:http://web.archive.org/web/20160925004021/https://nlp.stanford.edu/projects/glove/ [retrieved on 2018-01-25] * Section entitled "Download pre-trained word vectors" * | 5,15 | G06F |

-/--

The present search report has been drawn up for all claims

| Place of search | Date of completion of the search | Examiner |
|---|---|---|
| Berlin | 21 May 2019 | Woods, Justin |

EPO FORM 1503 03.82 (P04C01)

| Europäisches Patentamt European Patent Office Office européen des brevets | **EUROPEAN SEARCH REPORT** | Application Number EP 18 21 1564 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Cong Bao ET AL: "Learning Word Meta-Embeddings by Autoencoding", Proceedings of the 27th International Conference on Computational Linguistics, 20 August 2018 (2018-08-20), pages 1650-1661, XP055590313, Santa Fe, New Mexico, USA Retrieved from the Internet: URL:https://www.aclweb.org/anthology/C18-1 140 [retrieved on 2019-05-20] * Section 2 * | 1-20 | |

**TECHNICAL FIELDS SEARCHED (IPC)**

The present search report has been drawn up for all claims

| Place of search | Date of completion of the search | Examiner |
|---|---|---|
| Berlin | 21 May 2019 | Woods, Justin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62628177 A